**Europäisches Patentamt**

**European Patent Office**

**Office européen des brevets**

(19)

(11) Publication number: **0 017 493**
**A1**

## (12) EUROPEAN PATENT APPLICATION

(21) Application number: **80301084.2**

(22) Date of filing: **03.04.80**

(51) Int. Cl.³: **G 05 D 16/16**
**G 05 D 16/06, A 01 J 5/04**

(30) Priority: **03.04.79 GB 7911625**

(43) Date of publication of application:
**15.10.80 Bulletin 80/21**

(84) Designated Contracting States:
**BE DE FR GB NL SE**

(71) Applicant: **R.J. Fullwood & Bland Ltd.**

**Ellesmere Salop, SY12 9DG(GB)**

(72) Inventor: **Evans, John Richard**
**"Woodwinds" St. Martins Road**
**Gobowen Oswestry Salop(GB)**

(74) Representative: **Dowler, Angus Michael**
**Abel & Imray Northumberland House 303-306 High Holborn**
**London, WC1V 7LH(GB)**

(54) Improvements in and relating to vacuum regulators.

(57) The present invention provides a vacuum regulator, which comprises a main valve (12) for admitting air to a vacuum system at a controlled rate, a chamber (13) bounded in part by a first movable wall (9) which is connected to the main valve and movement of which varies the setting of the main valve, a pilot valve (21) for admitting air to the said chamber at a controlled rate, the pilot valve being connected to a second movable wall (19), movement of which varies the setting of the pilot valve, a spring (24) arranged to exert a substantially constant force on the pilot valve tending to increase its degree of opening, one side of the first movable wall being subjected to the pressure within the said chamber and the other side being subjected, in operation, to a pressure greater than that prevailing within the said chamber, and one side of the second movable wall being subjected, in operation, to the pressure in the vacuum system and the other side being subjected to atmospheric pressure, and a high impedance conduit (7) through which, in operation, air can flow out of the said chamber into the vacuum system, the arrangement being such that, in operation, movement of the first movable wall resulting from an increase or a decrease in the pressure in the said chamber decreases or increases, respectively, the degree of opening of the main valve, and that movement of the second movable wall resulting from an increase or a decrease in the pressure in the vacuum system causes the degree of opening of the pilot valve to increase or decrease, respectively, and that there is a force, in addition to the force exerted on the first movable wall by the pressure in the said chamber, tending to decrease the degree of opening of the main valve.

*FIG. 2.*

-1-

"Improvements in and relating to vacuum regulators"

The present invention relates to vacuum regulators, and especially to vacuum regulators for use in vacuum milking apparatus.

In vacuum milking apparatus, it is desired to maintain a constant level of vacuum, but air tends to leak into the system at a varying rate. Accordingly, it is known to provide a vacuum pump of sufficient capacity to maintain more than the desired degree of vacuum and then to provide a vacuum regulator, which is a device that allows air to leak into the system at such a rate as to maintain the vacuum in the system at a given level.

Throughout the specification, references to a degree or level of vacuum and references to pressures are to be understood as references to gauge values and not as references to absolute values.

British Patent Specification No. 965,774 discloses a regulator for controlling the flow of gas at a superatmospheric pressure. The present invention is based on the realisation that the design of the gas regulator described in that specification can be adapted to provide a vacuum regulator.

The invention provides a vacuum regulator, which comprises a main valve for admitting air to a vacuum system at a controlled rate, a chamber bounded in part by a first movable wall which is connected to the main valve and movement of which varies the setting of the main valve, a pilot valve for admitting air to the said chamber at a controlled rate, the pilot valve being connected to a second movable wall, movement of which varies the setting of the pilot valve, means arranged to exert a substantially constant force on the pilot valve tending to increase its degree of opening, one side of the first movable wall being subjected
to the pressure within the said chamber and the other side
being subjected, in operation, to a pressure greater than
that prevailing within the said chamber, and one side of
the second movable wall being subjected, in operation, to
the pressure in the vacuum system and the other side being
subjected to atmospheric pressure, and high impedance conduit
means through which, in operation, air can flow out of the
said chamber into the vacuum system, the arrangement being
such that, in operation, movement of the first movable wall
resulting from an increase or a decrease in the pressure
in the said chamber decreases or increases, respectively,
the degree of opening of the main valve, and that movement
of the second movable wall resulting from an increase or
a decrease in the pressure in the vacuum system causes the
degree of opening of the pilot valve to increase or decrease,
respectively, and that there is a force, in addition to the
force exerted on the first movable wall by the pressure in
the said chamber, tending to decrease the degree of opening
of the main valve.

In operation, the force exerted on the main valve as
a result of the pressure differential across the first
movable wall is opposed by the said force tending to decrease
the degree of opening of the main valve, and the force
exerted on the pilot valve by the pressure differential
across the second movable wall is opposed by the
substantially constant force. Thus, in operation, both the
main valve and the pilot valve will normally be open all
the time, but the degree of opening of the main valve (and
in some cases the degree of opening of the pilot valve also)
will depend upon the rate of leakage of air into the vacuum
system other than through the main valve.

Advantageously, each of the movable walls is a flexible
diaphragm.

Advantageously, the means arranged to exert a substantially constant force on the pilot valve is adjustable
to enable the magnitude of the substantially constant force
to be adjusted. In that way it is possible to adjust the
pressure which the vacuum regulator maintains in the vacuum
system. Preferably, the means arranged to exert a
substantially constant force on the pilot valve comprises
resilient means, for example, a coil spring arranged to act
in compression. Because the extent of movement of the pilot
valve is small, it is readily possible to ensure that the
resilient means exerts a substantially constant force.

Advantageously, the main valve is so constructed that,
in operation, air entering the vacuum system through the
main valve exerts an aerodynamic force on the main valve
which force constitutes at least a part of the additional
force tending to decrease the degree of opening of the main
valve. Instead of, or in addition to, so constructing the
main valve that, in operation, there is exerted on the main
valve an aerodynamic force tending to decrease the degree
of opening of the main valve, it is advantageous to provide
a weight or, preferably, resilient means for providing or
augmenting the additional force tending to decrease the
degree of opening of the main valve.

The vacuum regulator advantageously comprises a second
chamber having inlet means for atmospheric air, which chamber
is separated from the first-mentioned chamber by the first
movable wall and from which air can, in operation, enter
the vacuum system through the main valve. Although the inlet
means are preferably such that, in operation, the pressure
drop across them is small so that the pressure acting on
the side of the first movable wall means away from the first-
mentioned chamber is substantially atmospheric pressure,
that is not essential for satisfactory operation of the
vacuum regulator.

The vacuum regulator preferably comprises a third
chamber having inlet means for atmospheric air, which chamber is bounded in part by the second movable wall and from which air can pass into the first-mentioned chamber through the pilot valve.

The vacuum regulator may comprise a fourth chamber which is bounded in part by the second movable wall and which, in operation, is in communication with the vacuum system.

Preferably, the high impedance conduit means comprises a conduit formed with a constriction.

The invention also provides a vacuum milking apparatus which includes a vacuum regulator in accordance with the invention, the vacuum regulator being arranged, in operation, to maintain the level of vacuum in the vacuum system of the milking apparatus substantially constant.

Two forms of vacuum regulator constructed in accordance with the invention will now be described by way of example with reference to the accompanying drawings, in which:

Fig. 1 is a schematic axial cross-section of a first form of vacuum regulator; and

Fig. 2 is a schematic axial cross-section of a second form of vacuum regulator.

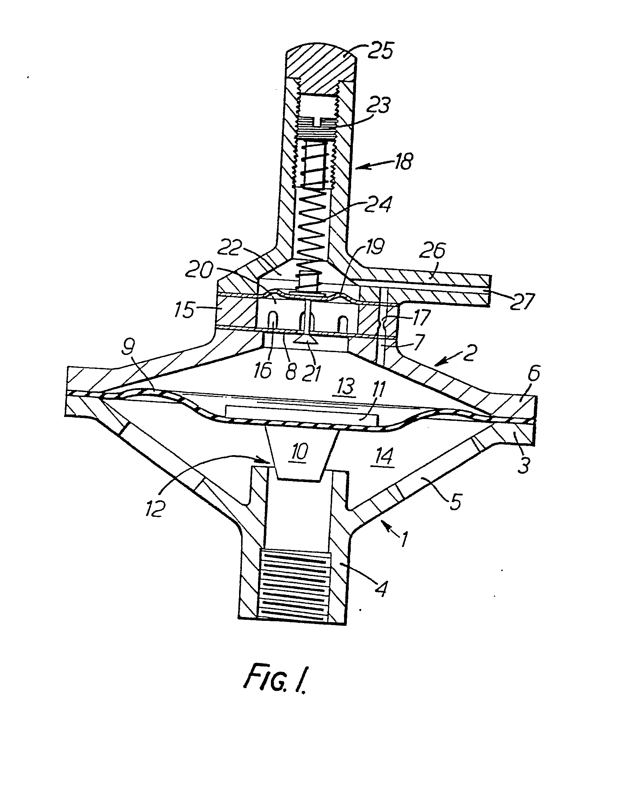

Referring to Fig. 1 of the accompanying drawings, the first form of vacuum regulator comprises a lower body member, which is indicated generally by the reference numeral 1 and an upper body member, which is indicated generally by the reference numeral 2.

The lower body member 1 is flared upwardly (with the vacuum regulator orientated as shown in the drawing) and terminates at its upper end in an outwardly extending annular flange 3. At its lower end, the body member 1 is secured to, or integral with, a length of pipe 4 of which the lower end portion is internally screw threaded. The flared portion of the body member 1 is formed with relatively large apertures 5 which constitute inlet means for atmospheric air.

The upper body member 2 is flared downwardly and terminates at its lower end in an outwardly extending annular
flange 6.  The upper end portion of the body member 2 is
formed with a vertical bore 7.  Extending across the open
top of the body member 2 is a circular plate 8, which is
formed with an aperture that is in register with the bore
7.

The peripheral portion of a first flexible circular
diaphragm 9 is clamped between the annular flanges 3 and
6.  Secured to the underside of the diaphragm 9 at its centre
is a downwardly tapering frusto-conical valve member 10,
a backing plate 11 being provided above the diaphragm.  The
valve member 10 co-operates with the upper end of the pipe
4 to form a main valve, which is indicated generally by the
reference numeral 12.

The upper body member 2, the plate 8 and the flexible
diaphragm 9 together define a first chamber 13, while the
lower body member 1 and the flexible diaphragm 9 together
define a second chamber 14.

The plate 8, which is formed with a central aperture,
is surmounted by a hollow cylindrical member 15, which is
formed with a plurality of apertures 16, which constitutes
inlet means for atmospheric air, and a bore which is in
register with the bore 7, the bore being formed with a
constriction 17, so that the bore 7 and its upward
continuation constitutes a high impendance conduit.

Clamped between the upper end of the cylindrical member
15 and the lower end of a generally hollow cylindrical member
which is indicated generally by the reference numeral 18
is the peripheral portion of a second circular flexible
diaphragm 19 which, together with the plate 8 and the
cylindrical member 15, defines a third chamber 20.

The flow of air from the third chamber 20 to the second
chamber 13 through the central aperture in the plate 8 is
controlled by an upwardly tapering conical valve member 21,
which co-operates with the central aperture in the plate

0017493

-6-

8 to form a pilot valve. The valve member 21 is connected
to a central region of the second flexible diaphragm 19 by
a valve stem and backing plates on either side of the
diaphragm.

The lower part of the member 18 is flared downwards
to form, with the second flexible diaphragm 19, a fourth
chamber 22.

The upper part of the member 18 is internally screw
threaded to receive a screw 23 against the underside of which
there abuts the upper end of a coil spring 24, which acts
in compression between the screw and the second flexible
diaphragm 19, thereby tending to move the valve member 21
downwardly and so to increase the degree of opening of the
pilot valve. Having regard to the length of the coil spring
24 in relation to the relatively small distance through which
the conical valve member 21 moves in operation, the coil
spring exerts a substantially constant force on the valve
member 21. The magnitude of that constant force can,
however, be adjusted by altering the setting of the screw
23.

The fourth chamber 22 is closed at its upper end by
a screw sealing plug 25.

Towards its lower end, the member 18 is formed with
a lateral extension 26 within which there is a co-axial bore
27 into which there opens the upper end of the upward
continuation of the bore 7.

In operation, the free end of the pipe 4 and the lateral
extension 26 are connected to the vacuum system. Thus, air
can flow into the vacuum system through the pipe 4 at a rate
controlled by the degree of opening of the main valve 12.
Also, the bore 27 is of sufficiently low impedance to ensure
that, despite the flow of air into the fourth chamber 22
via the bore 7 and the constriction 17, the pressure in the
fourth chamber 22 is substantially equal to the pressure
prevailing in the vacuum system.

The first chamber 13 is at an intermediate pressure, that is to say, it is at a pressure that is greater than the pressure in the vacuum system, but less than atmospheric pressure. In a steady state, the pressure differential across the second flexible diaphragm 19 maintains the pilot valve 21 in an open state and accordingly there is a flow of air at a controlled rate from the third chamber 20 to the first chamber 13 by way of the pilot valve 21. At the same time, there is a slow flow of air out of the first chamber 13 by way of the bore 7 and constriction 17.

In a steady state, the rate of flow of air out of the first chamber 13 equals the rate of flow of air into that chamber, and accordingly, the pressure in the first chamber remains constant. In operation, the pressure in the first chamber 13 is such that the pressure differential across the first flexible diaphragm 9 is sufficient to maintain the main valve member 10 clear of its seat and allow air to pass from atmosphere to the vacuum system _via_ the second chamber 14 at a rate that keeps the pressure in the vacuum system at the desired level.

If the pressure in the vacuum system falls, the pressure in the fourth chamber 22 also falls which causes the second flexible diaphragm 19 to move upwardly thereby closing or reducing the degree of opening of the pilot valve 21, which in turn reduces the flow of air from the third chamber 20 into the first chamber 13. The rate of flow of air out of the first chamber 13 is not substantially altered (assuming, as will usually be the case, that the change in pressure in the vacuum system is small) and therefore the pressure in the first chamber falls, which causes the first flexible diaphragm 9 to move upwardly and thereby increase the degree of opening of the main valve 12, which thereby admits air into the vacuum system at a higher rate causing the pressure therein to return towards the original steady state value. The regulator will eventually assume a steady state again.

0017493

-8-

If the pressure in the vacuum system rises, the pilot valve 21 will increase its degree of opening thereby raising the pressure in the first chamber 13 and reducing the degree of opening of the main valve 13, causing the pressure in the vacuum system to fall towards its original steady state value.

The value of the pressure in the vacuum system that the regulator maintains in a steady state can be increased or decreased by decreasing or increasing, respectively, the degree of compression of the coil spring 24 by adjusting the setting of the screw 23.

The most significant forces acting on the main valve member 10 are an upward force resulting from the pressure acting on the underside of the first flexible diaphragm 9, a downward force resulting from the pressure in the first chamber 13 acting on the upper side of the first flexible diaphragm, and an additional downward force caused by aerodynamic drag on the main valve member.

The most significant forces acting on the pilot valve 21 are an upward force resulting from the pressure differential across the second flexible diaphragm 19 and a downward force exerted by the spring 24.

Thus, the most significant forces acting on the main valve 12 and on the pilot valve 21 are substantially independent of gravity which, together with the fact that any frictional forces involved are small, means that the regulator does not have to be mounted with its axis vertical as shown in the drawing, but that it will operate satisfactorily in any desired orientation.

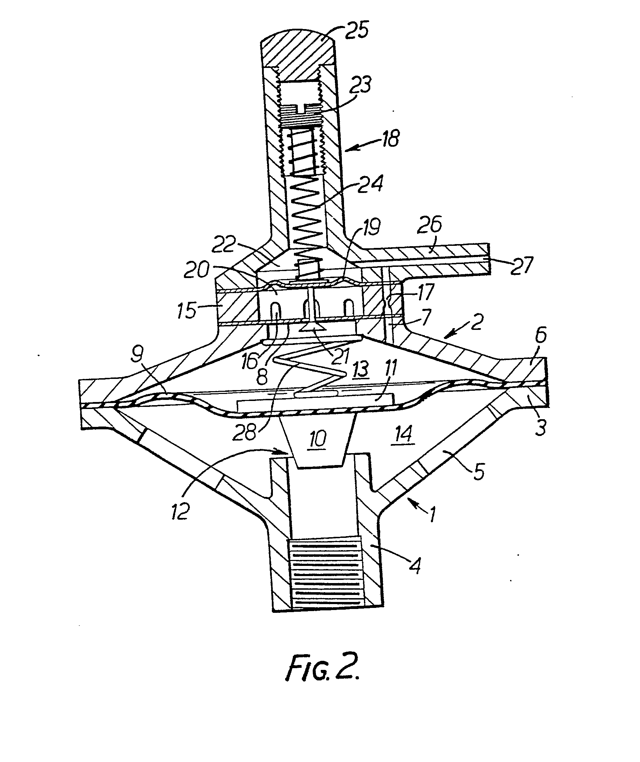

Referring to Fig. 2, the second form of vacuum regulator is similar to the first form except that there is interposed between the backing plate 11 and the inner surface of the upper body member 2 a conical spring 28, which contributes to the said additional downward force on the main valve member 10, and that a small shoulder is formed in the inner surface of the upper body member to receive the upper end of the conical spring.

It has been found that the second form of vacuum regulator has the advantage over the first form that, whereas the first form can tend to become unstable if it is fitted to a vacuum system requiring more than a given rate of flow of air into the system through the main valve 12, the second form remains stable at appreciably higher rates of flow of air through the main valve.

The reason for the improved stability of the second form of vacuum regulator is not fully understood. It is believed, however, that the explanation may be somewhat as follows. The aerodynamic drag on the main valve member 10, which tends to decrease the degree of opening of the main valve 12, decreases as the degree of opening of the valve 12 increases. On the other hand, the more rapid flow of air through the second chamber 14, which necessarily results from an increase in the degree of opening of the main valve 12, itself results in a reduction in the static pressure acting on the underside of the diaphragm 9. The resulting net force on the main valve member 10 thus tends, at least when the valve 12 is not nearly closed (when the aerodynamic drag can be relatively large), to remain more or less constant. The provision of the spring 28, however, provides a force that tends to decrease the degree of opening of the main valve 12 and that increases as the degree of opening of the main valve increases throughout the travel of the main valve member 10. Thus, except perhaps when the valve 12 is nearly closed, there is a net force acting on the main valve member 10 tending to decrease the degree of opening of the main valve and that increases as that degree of opening increases, and that is believed to be the factor that gives rise to the improved stability.

What we claim is:

1. A vacuum regulator, which comprises a main valve for admitting air to a vacuum system at a controlled rate, a chamber bounded in part by a first movable wall which is connected to the main valve and movement of which varies the setting of the main valve, a pilot valve for admitting air to the said chamber at a controlled rate, the pilot valve being connected to a second movable wall, movement of which varies the setting of the pilot valve, means arranged to exert a substantially constant force on the pilot valve tending to increase its degree of opening, one side of the first movable wall being subjected to the pressure within the said chamber and the other side being subjected, in operation, to a pressure greater than that prevailing within the said chamber, and one side of the second movable wall being subjected, in operation, to the pressure in the vacuum system and the other side being subjected to atmospheric pressure, and high impedance conduit means through which, in operation, air can flow out of the said chamber into the vacuum system, the arrangement being such that, in operation, movement of the first movable wall resulting from an increase or a decrease in the pressure in the said chamber decreases or increases, respectively, the degree of opening of the main valve, and that movement of the second movable wall resulting from an increase or a decrease in the pressure in the vacuum system causes the degree of opening of the pilot valve to increase or decrease, respectively, and that there is a force, in addition to the force exerted on the first movable wall by the pressure in the said chamber, tending to decrease the degree of opening of the main valve.

2. A vacuum regulator as claimed in claim 1, wherein one or each of the movable walls is a flexible diaphragm.

3. A vacuum regulator as claimed in claim 1 or claim 2, wherein the means arranged to exert a substantially constant force on the pilot valve is adjustable to enable the magnitude of the substantially constant force to be adjusted.

4. A vacuum regulator as claimed in any one of claims 1 to 3, wherein the means arranged to exert a substantially constant force on the pilot valve comprises resilient means.

5. A vacuum regulator as claimed in any one of claims 1 to 4, wherein the main valve is so constructed that, in operation, air entering the vacuum system through the main valve exerts an aerodynamic force on the main valve which force constitutes at least a part of the additional force tending to decrease the degree of opening of the main valve.

6. A vacuum regulator as claimed in any one of claims 1 to 5, which includes resilient means arranged to provide or augment the additional force tending to decrease the degree of opening of the main valve.

7. A vacuum regulator as claimed in any one of claims 1 to 6, which comprises a second chamber having inlet means for atmospheric air, which chamber is separated from the first-mentioned chamber by the first movable wall and from which air can, in operation, enter the vacuum system through the main valve.

8. A vacuum regulator as claimed in any one of claims 1 to 7, which comprises a third chamber having inlet means for atmospheric air, which chamber is bounded in part by the second movable wall and from which air can pass into the first-mentioned chamber through the pilot valve.

9. A vacuum regulator as claimed in any one of claims 1 to 8, which comprises a fourth chamber which is bounded in part by the second movable wall and which, in operation, is in communication with the vacuum system.

10. A vacuum regulator as claimed in any one of claims 1 to 9, wherein the high impedance conduit means comprises a conduit formed with a constriction.

11. A vacuum regulator substantially as hereinbefore described with reference to, and as shown in, Fig. 1 or Fig. 2 of the accompanying drawings.

12. A vacuum milking apparatus which includes a vacuum regulator as claimed in any one of claims 1 to 11, the vacuum regulator being arranged, in operation, to maintain the level of vacuum in the vacuum system of the milking apparatus substantially constant.

FIG. 1.

FIG. 2.

## DOCUMENTS CONSIDERED TO BE RELEVANT

| Category | Citation of document with indication, where appropriate, of relevant passages | Relevant to claim |
|---|---|---|
|  | <u>GB - A - 1 440 901</u> (WESTFALIA SEPARATOR A.G.)<br><br>* Page 1, lines 9-20; page 2, lines 6-128; figures 1-3 * | 1-12 |
|  | -- |  |
|  | <u>FR - A - 2 337 899</u> (ESTEVE TRIBALLAT ACONIN ETA)<br><br>* Page 2, line 11 - page 4, line 22; figure * | 1,2,4-8,10,11 |
|  | -- |  |
| A | <u>US - A - 2 977 966</u> (R.B. MATTHEWS)<br><br>* Column 2, line 50 - column 3, line 52; figure * | 1,2,4,6 |
|  | -- |  |
| A | <u>GB - A - 444 397</u> (PARKINSON AND COWAN-GAS METERS LTD.)<br><br>* Page 3, lines 25-113; figure * | 1,2,4 |
|  | ---- |  |

**CLASSIFICATION OF THE APPLICATION (Int. Cl. 3)**

G 05 D 16/16
　　　　　16/06
A 01 J　5/04

**TECHNICAL FIELDS SEARCHED (Int.Cl. 3)**

G 05 D 16/16
　　　　　16/06
A 01 J　5/04
　　　　　7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search | Date of completion of the search | Examiner |
| The Hague | 16-06-1980 | POINT |

EPO Form 1503.1　06.78